# FASCICULE DE BREVET EUROPEEN

(11) **EP 3 203 444 B1**
(45) Date de publication et mention de la délivrance du brevet: **05.05.2021**
(21) Numéro de dépôt: 17150301.4
(22) Date de dépôt: 04.01.2017
(51) Int. Cl.: G07C 1/10, G07C 3/00, G06Q 10/00

(54) **UNITÉ LOCALE DE SUIVI DE MAINTENANCE D'UN ÉQUIPEMENT ET PROCÉDÉ DE VALIDATION D'UNE MISSION D'INTERVENTION SUR L'ÉQUIPEMENT**
LOKALE EINHEIT ZUM NACHVERFOLGEN DER WARTUNG EINES GERÄTS, UND VALIDIERUNGSVERFAHREN EINES WARTUNGSEINGRIFFS AM GERÄT
LOCAL TRACKING UNIT FOR MAINTENANCE OF A DEVICE AND METHOD FOR VALIDATING A MISSION FOR INTERVENTION ON THE DEVICE

(30) Priorité: 08.01.2016 FR 1650142
(43) Date de publication de la demande: 09.08.2017
(73) Titulaire: Getraline, 78000 Versailles (FR)
(72) Inventeur: AZPITARTE, Jean-Patrick, 78150 Le Chesnay (FR); VIOLET, Nicolas, 91300 Massy (FR)
(74) Mandataire: Plasseraud IP

(56) Documents cités:
- WO-A1-2005/091230
- DE-U1-202013 011 509
- FR-A1- 2 845 223
- FR-A1- 3 027 707
- JP-A- 2003 296 781
- US-A1- 2007 168 488
- US-A1- 2013 290 154

## Description

La présente invention concerne une unité locale de suivi de la maintenance d'un équipement, ainsi qu'un procédé de validation d'une mission d'intervention qui est effectuée sur cet équipement.

De nombreuses circonstances nécessitent qu'un technicien intervienne sur un équipement installé sur un site déterminé, qui est différent du lieu auquel se trouve un gestionnaire de l'équipement, et qui peut aussi être différent du lieu professionnel auquel est rattaché le technicien. Le technicien est alors envoyé en mission sur le lieu de l'équipement, à une date convenue, pour y effectuer l'intervention de maintenance prévue.

Mais dans de telles circonstances d'intervention en mission sur un site éloigné, se pose le problème de vérifier que l'intervention sur le site est effectivement accomplie auprès de l'équipement convenu et par le technicien auquel la mission d'intervention a été attribuée. Une telle vérification peut être nécessaire en temps réel, pendant que l'intervention sur l'équipement est en train d'être accomplie, ou ultérieurement, par exemple lors de l'établissement d'un compte-rendu de l'intervention.

Dans le cadre de la présente description, les termes d'équipement, de technicien et de maintenance ont les significations suivantes :
équipement : toute installation ou aménagement, d'intérieur ou d'extérieur, quelque soit sa fonction. En particulier, ce peut être un équipement d'habitat individuel ou collectif, un équipement industriel, un équipement urbain, un équipement de transport, un équipement à accès libre ou limité, un aménagement de loisir, y compris un espace vert ou un parc municipal, etc ;
technicien : tout agent qui a la mission d'intervenir sur l'équipement ;
maintenance : toute opération à effectuer sur l'équipement, quelle que soit la finalité de l'opération, y compris dépannage, assistance, nettoyage, entretien de matériel ou d'espace vert, surveillance, etc.

L'invention peut aussi être appliquée à la vérification de l'intervention d'un agent au domicile particulier d'un résident, sous condition que ce domicile soit pourvu d'une unité locale conforme à l'invention. La prestation de l'agent qui est l'objet de l'intervention à domicile peut alors être une assistance à la personne, une assistance médicale, une garde d'enfant, du ménage, un service de cuisine ou de livraison, des travaux, etc.

Toutefois, un domaine d'application important de l'invention est la vérification d'une intervention effectuée par un technicien de maintenance sur un équipement qui est installé dans un habitat collectif, tel qu'un immeuble. Par exemple, l'équipement concerné peut être une chaudière de chauffage individuel, un équipement de production d'eau chaude sanitaire, désigné par l'acronyme ECS, ou un équipement de ventilation mécanique contrôlée, ou VMC.

Par ailleurs, il est connu, notamment du brevet FR 2 845 223, d'installer une unité locale de surveillance auprès d'un équipement, tel qu'un ascenseur, pour renseigner un carnet d'entretien électronique qui est dédié à cet équipement. Le carnet d'entretien électronique contient des informations sur les travaux qui sont effectués lors de chaque intervention de maintenance. Mais en outre, l'unité locale permet d'identifier le technicien qui est chargé de chaque intervention de maintenance de l'équipement, et d'enregistrer les heures de début et de fin de chaque intervention. L'identification du technicien qui est présent près de l'équipement pour effectuer une opération de maintenance est réalisée par le technicien lui-même. Pour cela, il saisit un code d'identification à l'aide d'un clavier dont l'unité locale peut être pourvue, ou au moyen d'un système de lecture de clés électroniques, de cartes à puces ou de cartes magnétiques, ou au moyen d'un système de reconnaissance biométrique.

Le document US 2007/168488 A1 divulgue un système électronique de suivi d'employés et de leurs tâches se basant sur l'emploi d'une unité locale de surveillance avec laquelle les employées interagissent au moyen d'un terminal de communication portable.

Le brevet FR 3 027 707 divulgue une unité locale de suivi de maintenance auprès d'un équipement pour permettre de suivre à distance une maintenance dudit équipement.Cette unité locale est pourvue d'une matrice d'affichage pour afficher un code bidimensionnel variable, et de moyens de mise à jour dudit code. Il est ainsi possible de fournir l'assurance qu'un technicien identifié se trouve réellement sur un site d'intervention de maintenance, tout en recueillant les horaires de début et de fin de la présence du technicien sur le site.

A partir de cette situation, un but de la présente invention consiste à améliorer encore l'unité locale, pour garantir avec plus de sûreté qu'une intervention de maintenance qui est prévue sur un équipement est ou a été effectuée par le technicien missionné.

Un but annexe de l'invention est de fournir une telle sûreté accrue avec des moyens, notamment des moyens individuels pour le technicien de maintenance, qui sont simples et peu onéreux.

Un but supplémentaire de l'invention peut aussi être de transmettre d'une façon simple, fiable et peu onéreuse, à un utilisateur de l'équipement, des informations actualisées sur l'état de l'équipement, des derniers résultats de mesures qui ont été effectuées sur l'équipement ou près de celui-ci, et une adresse internet qui permet de solliciter une intervention de maintenance.

Pour atteindre ces buts ou d'autres, un premier aspect de l'invention propose une nouvelle unité locale de suivi de maintenance qui est destinée à être installée à proximité d'un équipement, pour permettre de valider une mission d'intervention sur cet équipement. Cette nouvelle unité locale est adaptée pour permettre de saisir, mémoriser, transmettre ou fournir des données relatives à une intervention qui est effectuée par un technicien de maintenance en mission sur l'équipement. Elle comprend :
- un processeur ;
- une horloge qui est interne à cette unité locale de suivi de maintenance ;
- des moyens de présentation, qui sont contrôlés par le processeur et adaptés pour mettre un contenu de données à disposition d'un terminal de communication portable du technicien de maintenance, ce terminal étant externe à l'unité locale de suivi de maintenance ; et
- des moyens de transmission de données, qui sont contrôlés aussi par le processeur et qui sont adaptés pour transmettre une valeur à un serveur externe par l'intermédiaire d'un réseau de communication externe à l'unité locale de suivi de maintenance.

Selon l'invention, elle comprend en outre :
- un générateur aléatoire, qui est interne à l'unité locale de suivi de maintenance, et qui est adapté pour produire une nouvelle valeur de vérification de façon aléatoire ou pseudo aléatoire à chaque fonctionnement du générateur aléatoire ; et
- une mémoire, qui est agencée pour stocker une valeur en association avec un horodatage obtenu à partir de l'horloge ;

De plus, le processeur de l'unité locale de suivi de maintenance est adapté pour contrôler une exécution de la séquence d'étapes suivante, appelée séquence de renouvellement :
/i/ commander un nouveau fonctionnement du générateur aléatoire ;
/ii/ commander une mise-à-jour de la mémoire en inscrivant dans celle-ci la nouvelle valeur de vérification qui a été produite par le nouveau fonctionnement du générateur aléatoire, en association avec un horodatage du nouveau fonctionnement du générateur aléatoire ;
/iii/ commander les moyens de transmission de données pour transmettre la nouvelle valeur de vérification au serveur externe, en liaison avec un identifiant de l'unité locale de suivi de maintenance ;
/iv/ crypter l'horodatage du nouveau fonctionnement du générateur aléatoire ;
/v/ inclure dans le contenu de données, la nouvelle valeur de vérification, l'horodatage crypté, l'identifiant de l'unité locale de suivi de maintenance, et possiblement des données supplémentaires ; puis
/vi/ commander les moyens de présentation pour mettre le contenu de données tel que résultant de l'étape /v/ à disposition du terminal du technicien de maintenance.

Par principe, chaque valeur de vérification qui est produite par le générateur aléatoire est indépendante de paramètres de l'équipement et de résultats de mesures qui sont éventuellement produits par des capteurs ajoutés à l'unité locale de suivi de maintenance. Une telle valeur de vérification, aléatoire ou pseudo aléatoire, est en fait calculée par le générateur en utilisant un algorithme qui est inconnu du technicien et d'un utilisateur de l'équipement, si bien que chaque nouvelle valeur de vérification ne peut pas être devinée ni prévue par le technicien ou l'utilisateur. Ainsi, chaque nouvelle valeur de vérification apparaît aléatoire.

Le contenu de données qui est reçu par le terminal du technicien de maintenance à partir des moyens de présentation de l'unité locale de suivi de maintenance, constitue une copie de la valeur de vérification et de l'horodatage correspondant tels qu'ils résultent d'une dernière exécution de la séquence de renouvellement. Ces deux valeurs peuvent ensuite être vérifiées, notamment au sein du terminal de communication portable du technicien de maintenance, par rapport à des valeurs qui ont été transmises par un autre canal, notamment par l'intermédiaire du serveur externe. De cette façon, la présence du technicien sur le lieu de l'équipement est avérée par la valeur de vérification qu'il récupère sur place à partir de l'unité locale de suivi de maintenance. Cette valeur doit être conforme au dernier renouvellement produit par le générateur aléatoire de l'unité locale de suivi de maintenance. En outre, le cryptage de l'horodatage qui est associé à la valeur de vérification, tel que cet horodatage crypté est transmis au terminal du technicien, empêche qu'une falsification de cet horodatage puisse être tentée à des fins de tricherie ou de malveillance. L'unité locale de l'invention permet donc de contrôler avec un niveau de sûreté élevé, que l'intervention du technicien de maintenance sur l'équipement est conforme aux termes de sa mission, notamment en ce qui concerne l'identité du technicien et la date de son intervention.

Dans des modes de mise en œuvre préférés de l'invention, les moyens de présentation peuvent comprendre une matrice d'affichage. Celle-ci est alors commandée par le processeur à l'étape /vi/ pour afficher un code bidimensionnel qui est conforme au contenu de données tel que résultant de l'étape /v/. De cette façon, une image du code bidimensionnel affiché, qui est saisie par le technicien de maintenance avec son terminal, constitue une copie du code bidimensionnel qui et adaptée pour restituer le contenu de données. La valeur de vérification et l'horodatage crypté sont donc ainsi disponibles au sein du terminal du technicien de maintenance pour être vérifiés. En particulier, mais de façon non-limitative, le code bidimensionnel peut être de type QR-code, Datamatrix, Flashcode, ou être conforme à tout autre mode d'encodage d'information sous forme de logo bidimensionnel. Ces formats de codes bidimensionnels procurent une fiabilité particulièrement élevée à la transmission du contenu de données par les moyens de présentation. Une partie de ce contenu de données peut alors être affichée sur un écran du terminal de communication portable du technicien de maintenance, d'une façon qui est directement lisible par lui. Avantageusement, la matrice d'affichage peut être de type à encre électronique, pour réduire une consommation d'énergie de l'unité locale de suivi de maintenance.

L'opération de saisie d'une image du code bidimensionnel qu'effectue le technicien, par exemple la prise d'une photographie du code, en combinaison avec les éléments renouvelés du contenu de données qui sont inconnus du technicien, assure que le technicien est physiquement près de l'équipement qui est l'objet de l'intervention de maintenance. En particulier, une simple transmission de données d'identification personnelle, d'identification de l'équipement et d'horodatage qui serait effectuée à distance par un technicien malintentionné, sans se rendre sur le site de l'équipement, n'est plus suffisante pour tromper une vérification de l'intervention.

Dans le cadre de la présente invention, on entend par saisie d'image tout type de détection d'une information bidimensionnelle d'intensité lumineuse, notamment une acquisition d'image en instantané, appelée «snapshot» en anglais et qui correspond au mode usuel de prise de photographie. Mais la saisie d'image peut aussi être effectuée selon d'autres modes de détection de l'information bidimensionnelle d'intensité lumineuse, tel qu'un balayage par une rangée de détecteurs, couramment appelée scanner, par exemple un scanner portatif.

On entend aussi par matrice d'affichage tout afficheur qui est capable d'afficher un motif bidimensionnel en produisant des valeurs variables d'intensité lumineuse en des points d'image, ou pixels, qui sont répartis en lignes et en colonnes.

Par ailleurs, l'unité locale de suivi de maintenance peut comprendre en outre des moyens de communication à courte portée qui sont conformes à l'une des technologies suivantes : transmission infrarouge, transmission filaire, Bluetooth®, NFC pour «near field communication» en anglais, LiFi pour «Light Fidelity», et RFID pour «radio-identification».

De façon générale pour l'invention, l'unité locale de suivi de maintenance peut être adaptée pour qu'une exécution de la séquence de renouvellement, c'est-à-dire des étapes /i/ à /vi/, soit déclenchée par l'un des évènements suivants :
- une initialisation ou réinitialisation de l'unité locale de suivi de maintenance ;
- une expiration d'une durée de validité de la valeur de vérification qui est stockée dans la mémoire, cette durée de validité étant déterminée par le processeur à partir de la valeur de vérification elle-même ;
- une commande qui est reçue par l'unité locale de suivi de maintenance par l'intermédiaire des moyens de transmission de données, notamment de la part du serveur externe, ou par l'intermédiaire de ses moyens de communication à courte portée si l'unité locale de suivi de maintenance en est pourvue. Une telle commande peut être consécutive à un résultat négatif d'un test de validation de la mission d'intervention qui est basé sur la valeur de vérification et sur l'horodatage tels qu'inclus dans le contenu de données, puis recueillis par le terminal du technicien de maintenance à partir des moyens de présentation ; et
- une exécution terminée d'un test de validation de la mission d'intervention, qui est basé sur la valeur de vérification et sur l'horodatage, quel que soit le résultat positif ou négatif de ce test ; et
- une géolocalisation du terminal de communication portable du technicien de maintenance, qui révèle un éloignement ou un rapprochement de ce terminal par rapport à l'unité locale de suivi de maintenance en franchissant une distance-seuil.

Aussi de façon générale pour l'invention, le processeur peut être adapté pour inclure en outre dans le contenu de données, à l'étape /v/ parmi les données supplémentaires, une adresse URL, pour «uniform resource locator» en anglais et aussi appelée adresse internet ou adresse web, non-cryptée, sécurisée («https:/») ou non («http:/»). Cette adresse internet peut alors apparaître de façon lisible sur l'écran d'un terminal de communication portable d'un utilisateur de l'équipement qui a recueilli le contenu de données. Elle lui permet de solliciter à distance et rapidement des informations complémentaires sur l'équipement, ou une intervention de maintenance si cela est nécessaire.

Encore de façon générale pour l'invention, les moyens de transmission de données qui sont adaptés pour transmettre la valeur de vérification au serveur externe par l'intermédiaire du réseau de communication externe, peuvent être conformes à l'un des protocoles suivants : LoRaWAN pour «Long Range Wide Area Network», Wi-Fi, Sigfox®, et des protocoles de téléphonie mobile tels que GSM, 2G, 3G, 4G et 5G.

Dans des réalisations avantageuses de l'unité locale de l'invention, elle peut comprendre en outre l'un au moins des composants additionnels suivants :
- des moyens de détection d'un déplacement de l'unité locale de suivi de maintenance, et des moyens d'alerte qui sont agencés pour être activés lorsqu'un déplacement de l'unité locale de suivi de maintenance est détecté par les moyens de détection ;
- une source d'énergie, notamment une pile, une batterie, un générateur photovoltaïque et/ou un générateur à effet Peltier, pour alimenter au moins en partie un fonctionnement de l'unité locale de suivi de maintenance ; et
- au moins un capteur qui est sélectionné parmi un capteur de monoxyde de carbone, un capteur de composés organiques volatiles, un capteur de température, un capteur de pression, un capteur d'humidité, un capteur de débit d'air de ventilation, un capteur de vibrations, un microphone, un altimètre, un capteur de position d'un élément mécanique et un capteur de tension d'alimentation de l'équipement. Optionnellement, elle peut aussi comprendre au moins une entrée qui est dédiée pour recevoir une donnée d'état de l'équipement. Alors, le processeur peut avantageusement être agencé pour inclure dans le contenu de données, à l'étape /v/ parmi les données supplémentaires, au moins un résultat de mesure qui est produit par le capteur et/ou au moins une donnée d'état qui est reçue par l'entrée dédiée.

Un second aspect de l'invention propose un procédé de validation d'une mission d'intervention sur un équipement, qui est effectuée par un technicien de maintenance. Ce procédé est conforme à la revendication 10 et comprend la séquence d'étapes suivante :
/1/ installer une unité locale de suivi de maintenance qui est conforme au premier aspect de l'invention, à proximité de l'équipement ;
/2/ par le terminal de communication portable dont est muni le technicien de maintenance : recevoir de la part du serveur externe une clé de cryptage et la nouvelle valeur de vérification telle que transmise au serveur externe à la dernière exécution de l'étape /iii/ ;
/3/ par le technicien de maintenance lors de sa mission d'intervention sur l'équipement, et en utilisant son terminal : recueillir le contenu de données tel que mis à disposition par les moyens de présentation de l'unité locale de suivi de maintenance ; et
/4/ par le terminal du technicien de maintenance :
   /4-1/ extraire la nouvelle valeur de vérification et l'horodatage crypté, à partir du contenu de données recueilli ;
   /4-2/ décrypter l'horodatage crypté en utilisant la clé de cryptage ;
   /4-3/ comparer la nouvelle valeur de vérification qui a été extraite à la sous-étape /4-1/ avec la nouvelle valeur de vérification telle que reçue à l'étape /2/, et comparer l'horodatage qui a été décrypté à la sous-étape /4-2/ avec une heure délivrée par le terminal, et si la nouvelle valeur de vérification extraite à la sous-étape /4-1/ et la nouvelle valeur de vérification telle que reçue à l'étape /2/ sont identiques, et qu'en plus l'horodatage décrypté est compatible avec l'heure délivrée par le terminal selon un critère de compatibilité prédéterminé, alors la mission d'intervention du technicien de maintenance est validée, et invalidée dans le cas contraire.

Possiblement, la séquence des étapes /2/ à /4/ peut être répétée lorsque la mission d'intervention du technicien de maintenance est invalidée à la sous-étape /4-3/. De cette façon, une nouvelle tentative de validation de sa mission d'intervention peut être effectuée par le technicien de maintenance, en cas d'échec de sa première tentative.

Pour initialiser l'unité de locale de suivi de maintenance lors de son installation, l'étape /1/ peut comprendre :
- une affectation et une communication de l'identifiant à l'unité locale de suivi de maintenance, à partir du serveur externe et par l'intermédiaire des moyens de transmission de données de cette unité locale de suivi de maintenance ; et
- une communication de la clé de cryptage à l'unité locale de suivi de maintenance.

Lorsque le contenu de données comporte une adresse URL, ce contenu de données peut être recueilli par un utilisateur de l'équipement à partir des moyens de présentation. Alors, l'adresse URL peut être mise en œuvre par l'utilisateur pour communiquer à distance avec une société qui est en charge de réaliser la maintenance de l'équipement, ou avec un gestionnaire qui est en charge d'organiser cette maintenance, notamment pour solliciter une mission d'intervention sur l'équipement.

Enfin, le contenu de données qui est recueilli à l'étape /3/ peut contenir en outre parmi les données supplémentaires, des informations utiles pour activer un dispositif d'alarme pour travailleur isolé. Pour cela, ces informations utiles peuvent être transmises par le terminal de communication portable du technicien de maintenance à un centre d'assistance et de secours, par l'intermédiaire du réseau de communication externe.

En particulier, l'équipement objet de maintenance pour lequel l'invention est mise en œuvre, peut être une chaudière de chauffage d'habitation, un équipement de production d'eau chaude sanitaire (ECS), ou un équipement de ventilation mécanique contrôlée (VMC), chacun de ces équipements pouvant être collectif ou individuel.

D'autres particularités et avantages de la présente invention apparaîtront dans la description ci-après d'un exemple de mise en œuvre non limitatif, en référence aux dessins annexés, dans lesquels :
- la figure 1 illustre un équipement en situation de maintenance, auquel l'invention peut être appliquée ;
- la figure 2 est un schéma d'une unité locale de suivi de maintenance, qui est conforme à l'invention ; et
- la figure 3 montre des étapes d'un procédé de validation d'une mission d'intervention sur un équipement, qui met en œuvre l'invention.

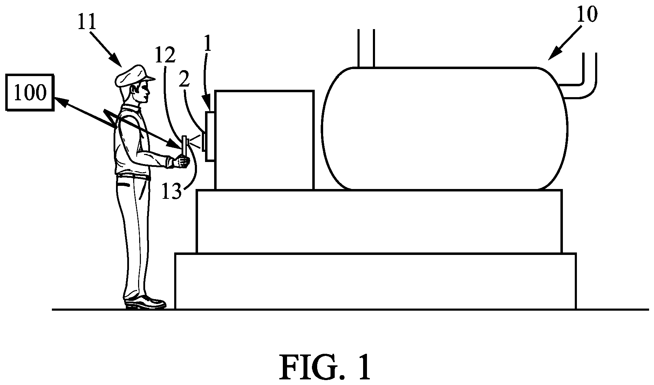

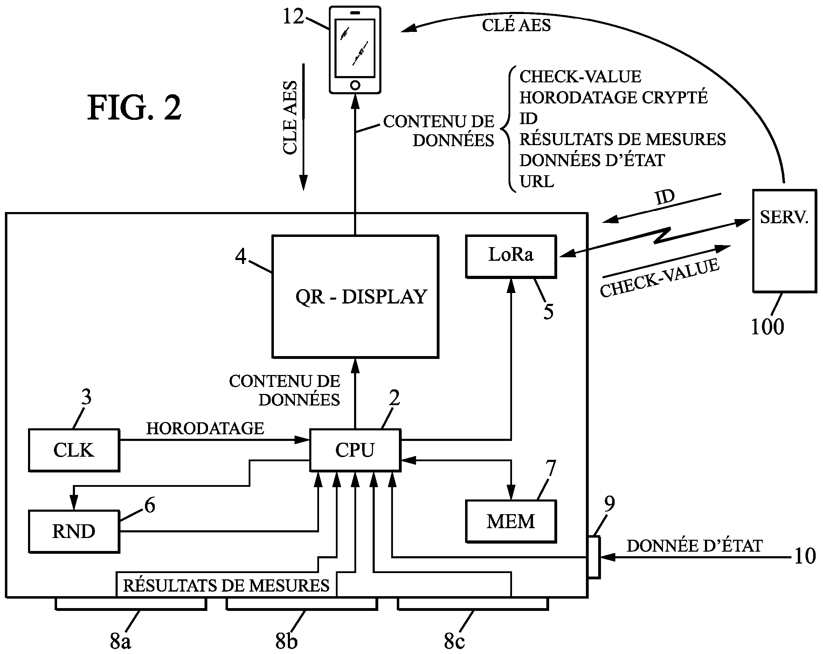

Pour raison de clarté, les dimensions des éléments qui sont représentés dans les figures 1 et 2 ne correspondent ni à des dimensions réelles ni à des rapports de dimensions réels. En outre, des références identiques qui sont indiquées dans des figures différentes désignent des éléments identiques ou qui ont des fonctions identiques.

L'invention est maintenant décrite en détail pour un équipement de chauffage, tel qu'une chaudière de chauffage individuel, par exemple dans un appartement d'un immeuble d'habitat collectif. Mais il est entendu que l'invention peut être appliquée à tout autre type d'équipement et d'intervention de maintenance ou de prestation, comme cela a été indiqué au début de la présente description.

Dans les figures, les références indiquées ont les significations qui sont listées maintenant :
- 1: unité locale de suivi de maintenance
- 2: processeur, noté CPU, de l'unité locale de suivi de maintenance
- 3: horloge, notée CLK, de l'unité locale de suivi de maintenance
- 4: matrice d'affichage, notée QR-DISPLAY, de l'unité locale de suivi de maintenance
- 5: moyens de transmission de données, notés LoRa, de l'unité locale de suivi de maintenance
- 6: générateur aléatoire, noté RND, de l'unité locale de suivi de maintenance
- 7: mémoire, notée MEM, de l'unité locale de suivi de maintenance
- 8a-8c: capteurs, qui sont optionnels pour l'invention
- 9: au moins une entrée de signal externe, qui est incorporée dans l'unité locale de suivi de maintenance, et aussi optionnelle
- 10: chaudière formant l'équipement objet de maintenance dans l'exemple considéré
- 11: technicien de maintenance missionné pour intervenir sur la chaudière
- 12: terminal de communication portable dont est muni le technicien de maintenance
- 13: appareil de saisie d'image dont est pourvu le terminal de communication portable, par exemple un appareil photographique
- 100: serveur externe, noté SERV, par exemple d'un centre de suivi ou de contrôle à distance de l'intervention du technicien de maintenance

L'unité locale de suivi de maintenance 1 est installée à proximité de ou sur l'équipement 10. Par exemple, elle peut avoir la forme d'un boîtier à accrocher près d'un panneau de contrôle de l'équipement 10. L'unité locale 1 comporte la matrice d'affichage 4, de préférence sur sa face antérieure, et renferme le processeur 2, l'horloge 3, le générateur aléatoire 6 et la mémoire 7. Dans l'exemple considéré, la matrice d'affichage 4 constitue les moyens de présentation qui ont été introduits dans la partie générale de cette description. Avantageusement, la matrice d'affichage 4 peut être du type à encre électronique.

L'unité locale 1 comprend aussi les moyens de transmission de données 5, qui peuvent être conformes au protocole de transmission LoRaWAN, pour «Long Range Wide Area Network». Ces moyens de transmission de données 5, notés LoRa, permettent d'envoyer des données à partir de l'unité locale 1 au serveur externe 100, et de recevoir des données en provenance de ce dernier, par l'intermédiaire d'un réseau de communication externe tel qu'un réseau téléphonique ou un réseau internet.

D'autres composants optionnels de l'unité locale 1 peuvent être les capteurs 8a-8c, l'entrée de signal externe 9, une source d'énergie autonome, des moyens de détection d'un déplacement de l'unité locale 1 et des moyens d'alerte. Ces composants n'ont pas tous été représentés dans les figures, étant individuellement bien connus de l'Homme du métier.

Les capteurs 8a-8c peuvent être sélectionnés en fonction du type de l'équipement 10 et du lieu d'installation de cet équipement. Ils peuvent être sélectionnés pour fournir des mesures qui sont utiles pour diagnostiquer un état de fonctionnement ou de défaut de l'équipement 10, ou pour prévenir de conditions d'intervention qui pourraient être dangereuses pour le technicien 11. Par exemple, ce peut être un capteur de monoxyde de carbone, un capteur de composés organiques volatiles, un capteur de température, un capteur de pression, un capteur d'humidité, etc.

L'entrée de signal externe 9 peut être connectée à l'équipement 10, par exemple pour recevoir une ou plusieurs donnée(s) d'état de l'équipement, notamment sous forme de données binaires. De telles données d'état peuvent être notamment des signaux de validation de fonctionnement ou des signaux d'erreur.

La source d'énergie autonome, optionnelle, peut être une pile, une batterie, un générateur à cellules photovoltaïques ou un générateur à effet Peltier, selon les conditions d'implantation de l'équipement 10. Cette source d'énergie peut alimenter seule l'unité locale 1, ou en complément avec une alimentation électrique par câble, ou en relais d'une telle alimentation électrique par câble.

Les moyens de détection d'un déplacement de l'unité locale de suivi de maintenance 1 ont pour fonction de détecter un tel déplacement qui ne serait pas prévu. En effet, par sa fonction, l'unité locale 1 est destinée à rester en place à partir de son installation, à proximité de l'équipement 10 auquel elle est dédiée, et un tel déplacement pourrait être malintentionné ou anormal lorsqu'il n'est pas prévu. Ces moyens de détection de déplacement peuvent être constitués par un accéléromètre interne à l'unité locale 1, ou par tout système de détection d'un arrachement de l'unité locale 1 par rapport à son support d'installation. L'unité locale 1 comporte alors aussi des moyens d'alerte qui sont activés par les moyens de détection du déplacement. Par exemple, les moyens d'alerte peuvent être une sirène ou des moyens pour transmettre un signal d'alerte au centre de suivi ou de contrôle à distance, par l'intermédiaire des moyens de transmission de données 5 de l'unité locale 1.

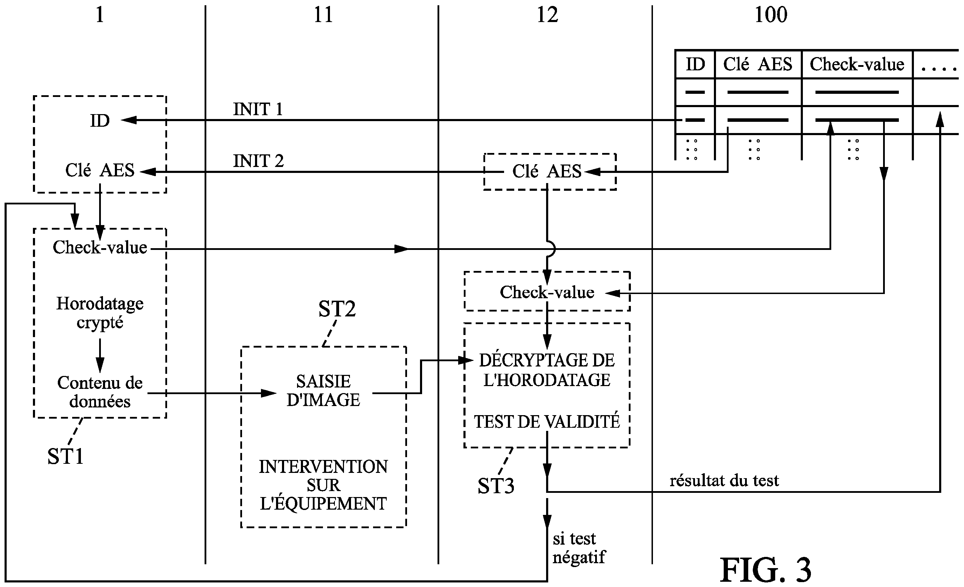

Le fonctionnement du générateur aléatoire 6 est autonome, par exemple en utilisant un algorithme récursif qui a été programmé et chargé initialement. De façon connue, un tel générateur aléatoire 6 peut être intégré au processeur 2, même s'il est représenté séparément de ce dernier sur la figure 2. Chaque nouveau fonctionnement du générateur aléatoire 6 produit une nouvelle valeur de vérification, notée «check-value» dans les figures 2 et 3, qui n'a pas de corrélation apparente avec la valeur de vérification précédente, ni avec aucun des paramètres de l'équipement 10.

En outre, le processeur 2 est conçu pour associer à chaque valeur de vérification qui est produite par le générateur aléatoire 6, un horodatage du fonctionnement de ce dernier dont est issue la valeur de vérification concernée. Le couple de données qui est ainsi formé par chaque valeur de vérification et son horodatage, est enregistré dans la mémoire 7, jusqu'à être remplacé par une nouvelle valeur de vérification produite par un nouveau fonctionnement du générateur aléatoire 6, avec son propre horodatage.

En outre, selon l'invention, le processeur 2 construit un contenu de données qui est affiché sur la matrice d'affichage 4. Ce contenu de données regroupe la valeur de vérification qui est en cours de validité, c'est-à-dire celle qui est stockée dans la mémoire 7, l'horodatage associé, c'est-à-dire celui qui est aussi stocké dans la mémoire 7, un identifiant de l'unité locale de suivi de maintenance 1, noté ID dans les figures 2 et 3, et des données supplémentaires optionnelles telles qu'un ou plusieurs résultat(s) de mesure(s) délivré(s) par les capteurs 8a-8c, une ou plusieurs donnée(s) d'état de l'équipement 10 reçue(s) par l'entrée de signal externe 9, une adresse URL, etc. Toutefois, avant d'être incorporé dans le contenu de données, l'horodatage est crypté par le processeur 2. Le contenu de données ainsi construit est alors codé par le processeur 2 dans un format qui est adapté aux moyens de présentation de l'unité locale 1. Dans le cas où ces moyens sont constitués par la matrice d'affichage 4, le contenu de données peut être mis sous forme d'un QR-code qui est affiché. Lorsque ce QR-code est saisi en image par le technicien de maintenance 11, avec son terminal de communication portable 12, une application exécutée par ce terminal restitue le contenu de données, pour que certaines au moins de ses données qui n'ont pas été cryptées soient lisibles par le technicien 11. Les données restituées peuvent aussi être utilisées au sein du terminal 12, ou retransmises par le terminal 12 au serveur externe 100. L'horodatage est décrypté au sein du terminal 12, le cryptage ayant été utile pour sécuriser la transmission entre l'unité locale 1 et le terminal 12. Ce cryptage nécessite que l'unité locale 1 dispose d'une clé de cryptage, et que le terminal 12 dispose de la même clé pour opérer le décryptage. La mise à disposition de cette clé de cryptage sera décrite plus loin en référence à la figure 3. Le cryptage qui est mis en œuvre peut être conforme au standard AES, pour «Advanced Encryption Standard», mais d'autres méthodes de cryptage peuvent être utilisées alternativement.

Le terminal de communication portable 12 peut être un smartphone, ou téléphone à accès internet, une tablette, ou un terminal professionnel portable, qui est pourvu d'un appareil de saisie d'image, par exemple un appareil photographique. Celui-ci possède une optique qui est adaptée pour photographier la matrice d'affichage 2 de l'unité locale 1, en faisant apparaître le contenu qui est affiché sur la matrice d'affichage 2 d'une façon suffisamment nette dans des images qui sont saisies. L'application de décodage des QR-codes qui est hébergée dans le terminal 12, peut alors extraire le QR-code de l'image saisie, le décoder et afficher sur un écran du terminal 12 des données qui sont issues du décodage. En outre, le terminal 12 héberge aussi une application de décryptage, qui est utilisée pour décrypter l'horodatage. Enfin, pour être relié au réseau de communication externe, le terminal de communication 12 peut être muni d'une carte SIM et de moyens de transmission adaptés, par exemple des moyens de téléphonie mobile.

Le serveur externe 100 est aussi connecté au réseau de communication externe. Il peut ainsi transmettre et recevoir des données avec les moyens de transmission 5 de l'unité locale 1, et indépendamment aussi avec le terminal 12. Autrement dit, le serveur 100, l'unité locale 1 et le terminal 2 ont des adresses respectives qui sont distinctes, pour communiquer par l'intermédiaire du réseau de communication externe.

Typiquement, le serveur externe 100 stocke une table dont chaque ligne est dédiée à un équipement différent, repéré par son identifiant. La ligne qui est dédiée à l'équipement 10 regroupe les données suivantes (figure 3) : l'identifiant ID de l'unité locale 1, la clé de cryptage qui est utilisée par cette unité locale, la valeur de vérification qui est en cours de validité, et des données supplémentaires et informations facultatives. Ces dernières peuvent comprendre une adresse géographique d'installation de l'équipement 10, ou des coordonnées de géolocalisation de l'équipement 10, une référence de l'équipement, telle qu'un numéro de modèle, un numéro de série, certains résultats de mesures qui ont été produits par les capteurs 8a-8c puis transmis au serveur 100, une information concernant l'intervention qui est prévue sur l'équipement 10, telle que le motif de l'intervention de maintenance, etc.

Les quatre colonnes de la figure 3 indiquent les entités qui réalisent les étapes décrites dans la suite, pour mettre en œuvre un procédé conforme à l'invention.

Les étapes INIT1 et INIT2 constituent une initialisation de l'unité locale 1 lorsqu'elle est installée à proximité de l'équipement 10.

L'étape INIT1 peut consister à transmettre à l'unité locale 1 l'identifiant ID qui lui a été affecté dans la table du serveur 100. Cette transmission peut être effectuée par l'intermédiaire du réseau de communication externe et des moyens de transmission de données 5 de l'unité locale 1.

L'étape INIT2 peut consister à transmettre à l'unité locale 1 la clé d'encryptage, notée clé AES. De préférence, cette transmission peut être effectuée par l'intermédiaire d'un opérateur d'installation, qui transfère la clé AES dans l'unité locale 1 à l'aide d'un terminal de communication portable dont il est muni. Ce transfert de la clé AES, du terminal de l'opérateur d'installation à l'unité locale 1, peut être réalisé par communication NFC, par exemple.

Eventuellement, l'initialisation de l'unité locale 1 peut comprendre en outre un ou plusieurs fonctionnements successifs du générateur aléatoire 6, pour produire une première valeur de vérification considérée comme valide.

Le générateur aléatoire 6 est de nouveau activé ultérieurement, lors d'une séquence de renouvellement qui peut être déclenchée périodiquement, ou à la fin d'une durée de validité de chaque valeur de vérification, ou par une commande spéciale qui est reçue par l'unité locale 1, ou encore par un évènement externe à l'unité locale 1. Dans la figure 3, la séquence de renouvellement est indiquée par la référence ST1. Chaque séquence de renouvellement qui est effectuée comprend un nouveau fonctionnement du générateur aléatoire 6, la construction d'un nouveau contenu de données et son affichage sur la matrice d'affichage 4 comme cela a été décrit plus haut. En outre, la nouvelle valeur de vérification est transmise à partir de l'unité locale 1, par ses moyens de transmission 5 au serveur 100 qui l'enregistre dans sa table.

Possiblement, une durée de validité peut être affectée à chaque valeur de vérification, qui correspond à la durée pendant laquelle cette valeur de vérification pourra être utilisée pour valider la mission d'intervention du technicien 11. Cette durée de validité peut être déterminée à partir de la valeur de vérification elle-même, et décomptée à partir de l'horodatage relatif à cette valeur de vérification. Dans ce cas, l'expiration de la durée de validité de la valeur de vérification en cours déclenche une nouvelle exécution de la séquence de renouvellement par l'unité locale 1.

Possiblement aussi, la séquence de renouvellement peut être déclenchée par une requête qui est émise par la société en charge de la maintenance de l'équipement 10, ou par un gestionnaire de l'équipement 10, et qui est reçue par les moyens de transmission de données 5 de l'unité locale 1.

Possiblement encore, le terminal 12 du technicien de maintenance 11 peut être muni d'un système de géolocalisation, de sorte qu'un rapprochement du technicien vers l'équipement 10 peut être détecté automatiquement. Dans ce cas, la séquence de renouvellement du contenu de données peut être déclenchée lorsque le système de géolocalisation révèle que le technicien 11 se rapproche de l'équipement 10 à moins d'une distance-seuil prédéterminée, par exemple à moins de 50 mètres. De la même façon, la séquence de renouvellement peut être déclenchée lorsque le système de géolocalisation révèle que le technicien de maintenance 11 s'éloigne de l'équipement 10 de plus de la distance-seuil prédéterminée.

Le serveur 100 peut alors adresser au terminal 12, la clé AES et la dernière valeur de vérification entrée dans la table, en liaison avec l'identifiant ID de l'équipement 10. Cette transmission, qui peut être effectuée par l'intermédiaire du réseau de communication externe, est indépendante de l'unité locale 1. Préférablement, la clé AES peut avoir été chargée préalablement dans le terminal 12 avant le départ en mission du technicien 11, par un moyen sécurisé indépendant du réseau de communication externe.

L'étape ST2 est effectuée par le technicien de maintenance 11. Elle comprend la saisie en image du QR-code qui est affiché sur l'unité locale 1, et l'intervention du technicien 11 sur l'équipement 10. Cette intervention peut être une réparation, une opération d'entretien, de nettoyage ou de contrôle, etc.

L'étape ST3 est effectuée au sein du terminal de communication portable 12 du technicien de maintenance 11. Le terminal 12 récupère le contenu de données à partir de l'image du QR-code qui a été saisie. L'adresse URL, les résultats de certaines au moins des mesures réalisées par les capteurs 8a-8c, certaines au moins des données d'état reçues par l'entrée de signal externe 9, ainsi que d'autres données qui peuvent avoir été ajoutées dans le contenu de données peuvent être affichées sur un écran du terminal 12, pour être disponibles pour le technicien 11. La valeur de vérification et l'horodatage crypté sont isolés à partir du contenu de données. L'horodatage est ensuite décrypté par le terminal 12 en utilisant la clé AES reçue antérieurement. Alors un test de validation de la mission d'intervention du technicien 11 est réalisé au sein du terminal 12, portant à la fois sur la valeur de vérification et sur l'horodatage. Ce test peut être réalisé par une application dédiée qui est hébergée par le terminal 12. Le test de validation est déclaré positif si la valeur de vérification qui a été extraite du contenu de données transmis via le QR-code, est identique à celle qui a été reçue de la part du serveur externe 100, et si en outre l'horodatage décrypté est compatible avec une heure actuelle fournie par le terminal 12. Par «compatible» on entend que l'heure actuelle qui est fournie par le terminal 12 se situe dans la durée de validité de la valeur de vérification, compte tenu d'une marge d'erreur acceptable qui est prédéterminée. Si l'une de ces deux conditions n'est pas satisfaite, alors le test de validation est déclaré négatif. Le résultat du test peut être transmis avec l'identifiant ID de l'unité locale 1, par le terminal 12 au serveur 100 par l'intermédiaire du réseau de communication externe, de préférence sans qu'une action ne soit requise de la part du technicien 11. Lorsque le résultat du test de validation est négatif, le serveur 100 peut déclencher une nouvelle exécution de la séquence de renouvellement ST1, et un message peut être affiché sur le terminal 12 pour demander au technicien 11 de saisir le nouveau QR-code qui est affiché sur l'unité locale 1. Le test de validation de la mission d'intervention peut alors être répété.

Eventuellement, le serveur 100 peut déclencher une nouvelle exécution de la séquence de renouvellement ST1 quel que soit le résultat du test de validation, de sorte que la valeur de vérification soit modifiée dès qu'elle a été utilisée une fois.

Lorsque la séquence de renouvellement ST1 est exécutée périodiquement, elle peut être exécutée une fois par jour, ou une fois par demi-journée, par exemple. Un tel déclenchement périodique peut être interne à l'unité locale 1, de même que des déclenchements qui sont provoqués par l'expiration de la durée de validité de la valeur de vérification. Tous les différents types de déclenchements peuvent aussi être combinés, sans restriction.

La transmission préalable de la clé de cryptage et de la valeur de vérification, au terminal 12 par le serveur 100, permet de garantir que le technicien 11 qui va intervenir sur l'équipement 10 est bien celui qui a été missionné. En effet, une autre personne qui n'aura pas reçu la clé de cryptage ni la valeur de vérification sur son terminal 12, ne pourra pas satisfaire le test de validation.

En outre, la plage horaire pendant laquelle le technicien 11 se trouve près de l'équipement 10 peut être contrôlée avec sûreté grâce au fait que la valeur de vérification et l'horodatage associé sont inconnus a priori du technicien 11, et ne sont pas accessibles autrement qu'en photographiant la matrice d'affichage 2.

Possiblement, une authentification du technicien 11 peut être réalisée par un test de reconnaissance biométrique qui est exécuté par le terminal 12. Un tel test peut porter sur une empreinte digitale ou une reconnaissance d'iris, et son résultat peut être transmis au serveur externe 100 par le terminal 12 en même temps que le résultat du test de validation de la mission d'intervention, basé sur la valeur de vérification et l'horodatage correspondant. Le terminal 12 peut être identifié en transmettant simultanément au serveur externe 100 des données d'identification telles qu'un numéro de téléphone du terminal de communication, ou MSISDN pour Mobile Station ISDN Number, un numéro d'identification de l'usager du terminal qui est stocké dans la carte SIM, tel que l'IMSI pour International Mobile Subscriber Identity, un numéro d'identification du terminal lui-même, tel que l'IMEI pour International Mobile Equipment Identity, un identifiant internet, tel qu'une adresse de courrier électronique, ou un code personnel convenu, etc. Des coordonnées de géolocalisation du terminal de communication 12, correspondant au moment où l'image du code bidimensionnel est saisie, peuvent aussi être transmises simultanément au serveur externe 100.

Eventuellement, le résultat du test de validation de la mission d'intervention ainsi que certains des autres éléments d'identification qui viennent d'être indiqués, peuvent être adressés simultanément au serveur externe 100, à un gestionnaire de l'équipement 10 ou de l'immeuble dans lequel cet équipement est installé, et aussi à un utilisateur de l'équipement 10, tel qu'un habitant de l'immeuble. Ces transmissions comportent aussi une indication horaire de leur exécution, formant preuves supplémentaires de la présence du technicien 11 près de l'équipement 10 à cet instant.

Une utilisation annexe de l'unité locale de suivi de maintenance 1 peut être dédiée à un utilisateur de l'équipement 10. Par exemple, lorsque l'équipement 10 est en panne ou présente un dysfonctionnement, un utilisateur, par exemple un résident de l'appartement ou de l'immeuble dans lequel la chaudière est installée, peut prendre une photographie du code bidimensionnel qui est affiché sur l'unité locale de suivi de maintenance 1, à l'aide de son propre smartphone. Lorsque le contenu de code contient une adresse URL, le décodage du code bidimensionnel lui révèle cette adresse qui peut lui permettre de joindre une société en charge de la maintenance de l'équipement ou un gestionnaire en charge d'organiser cette maintenance, éventuellement pour demander une intervention de maintenance. Le contenu de données qui est récupéré du code bidimensionnel photographié permet d'identifier l'équipement qui fait l'objet de la demande d'intervention. Il peut permettre en outre de fournir des indications utiles sur le motif de l'intervention qui est demandée, et éventuellement aussi pour effectuer à distance un premier diagnostic du dysfonctionnement de l'équipement.

Enfin, une autre utilisation annexe de l'unité locale de suivi de maintenance 1 par le technicien 11 concerne des situations de danger qui peuvent survenir pendant l'intervention de maintenance. En effet, le contenu de données peut inclure des indications sur les circonstances du danger, notamment les résultats des mesures qui ont été réalisées par les capteurs 8a-8c, utiles pour dépêcher une assistance ou des secours. Ces indications utiles peuvent alors activer un dispositif d'alarme pour travailleur isolé (DATI), et être transmises par le terminal 12 à un centre d'assistance et de secours dont l'adresse est préenregistrée dans le terminal 12.

L'Homme du métier comprendra que de multiples variantes de l'invention peuvent être utilisées, par rapport au mode de mise en œuvre qui a été décrit en détail ci-dessus, tout en conservant certains au moins des avantages cités. Parmi ces avantages, le principal est de fournir l'assurance qu'un technicien missionné se trouve réellement sur le site d'une intervention de maintenance. Le procédé de l'invention est particulièrement robuste dans ce but, par rapport à des intentions de tricherie de la part d'un technicien peu scrupuleux.

## Revendications

1. Unité locale de suivi de maintenance (1) destinée à être installée à proximité d'un équipement (10), pour permettre de valider une mission d'intervention sur ledit équipement, ladite unité locale étant adaptée pour permettre de saisir, mémoriser, transmettre ou fournir des données relatives à une intervention qui est effectuée par un technicien de maintenance (11) en mission sur l'équipement, et comprenant :
- un processeur (2) ;
- une horloge (3) interne à ladite unité locale de suivi de maintenance (1) ;
- des moyens (4) de présentation, contrôlés par le processeur (2) et adaptés pour mettre un contenu de données à disposition d'un terminal (12) de communication portable du technicien de maintenance (11), ledit terminal étant externe à l'unité locale de suivi de maintenance (1) ; et
- des moyens (5) de transmission de données, contrôlés par le processeur (2) et adaptés pour transmettre une valeur à un serveur externe (100) par l'intermédiaire d'un réseau de communication externe à l'unité locale de suivi de maintenance (1) ;
**caractérisée en ce que** l'unité locale de suivi de maintenance (1) comprend en outre :
- un générateur aléatoire (6), qui est interne à ladite unité locale de suivi de maintenance (1), et qui est adapté pour produire une nouvelle valeur de vérification de façon aléatoire ou pseudo aléatoire à chaque fonctionnement dudit générateur aléatoire ; et
- une mémoire (7), qui est agencée pour stocker une valeur en association avec un horodatage obtenu à partir de l'horloge (3) ;
dans lequel le processeur (2) est adapté pour contrôler une exécution de la séquence d'étapes suivante :
/i/ commander un nouveau fonctionnement du générateur aléatoire (6) ;
/ii/ commander une mise-à-jour de la mémoire (7) en inscrivant dans ladite mémoire la nouvelle valeur de vérification produite par le nouveau fonctionnement du générateur aléatoire (6), en association avec un horodatage dudit nouveau fonctionnement du générateur aléatoire ;
/iii/ commander les moyens (5) de transmission de données pour transmettre la nouvelle valeur de vérification au serveur externe (100), en liaison avec un identifiant de l'unité locale de suivi de maintenance (1) ;
/iv/ crypter l'horodatage du nouveau fonctionnement du générateur aléatoire (6) ;
/v/ inclure dans le contenu de données, la nouvelle valeur de vérification, l'horodatage crypté, l'identifiant de l'unité locale de suivi de maintenance (1), et possiblement des données supplémentaires ; puis
/vi/ commander les moyens (4) de présentation pour mettre le contenu de données tel que résultant de l'étape /v/ à disposition du terminal (12) du technicien de maintenance (11).

2. Unité locale de suivi de maintenance (1) selon la revendication 1, dans laquelle les moyens (4) de présentation comprennent une matrice d'affichage, qui est commandée par le processeur (2) à l'étape /vi/ pour afficher un code bidimensionnel conforme au contenu de données tel que résultant de l'étape /v/, de sorte qu'une image du code bidimensionnel affiché, qui est saisie par le technicien de maintenance (11) avec son terminal (12), constitue une copie du code bidimensionnel adaptée pour restituer le contenu de données.

3. Unité locale de suivi de maintenance (1) selon la revendication 2, dans laquelle le code bidimensionnel est de type QR-code, Datamatrix ou flash-code.

4. Unité locale de suivi de maintenance (1) selon la revendication 2 ou 3, dans laquelle la matrice d'affichage est de type à encre électronique.

5. Unité locale de suivi de maintenance (1) selon la revendication 1, comprenant en outre des moyens de communication à courte portée conformes à l'une des technologies suivantes : transmission infrarouge, transmission filaire, Bluetooth, NFC, LiFi et RFID.

6. Unité locale de suivi de maintenance (1) selon l'une quelconque des revendications précédentes, adaptée pour qu'une exécution des étapes /i/ à /vi/ soit déclenchée par l'un des évènements suivants :
- une initialisation ou réinitialisation de l'unité locale de suivi de maintenance (1) ;
- une expiration d'une durée de validité de la valeur de vérification stockée dans la mémoire (7), ladite durée de validité étant déterminée par le processeur (2) à partir de ladite valeur de vérification ;
- une commande reçue par l'unité locale de suivi de maintenance (1) par l'intermédiaire des moyens (5) de transmission de données, notamment de la part du serveur externe (100), ou par l'intermédiaire de moyens (4) de communication à courte portée de ladite unité locale de suivi de maintenance, ladite commande pouvant être consécutive à un résultat négatif d'un test de validation de la mission d'intervention qui est basé sur la valeur de vérification et sur l'horodatage tels qu'inclus dans le contenu de données, puis recueillis par le terminal (12) du technicien de maintenance (11) à partir des moyens (4) de présentation ;
- une exécution terminée d'un test de validation de la mission d'intervention, qui est basé sur la valeur de vérification et sur l'horodatage, quel que soit le résultat positif ou négatif dudit test ; et
- une géolocalisation du terminal (12) de communication portable du technicien de maintenance (11), qui révèle un éloignement ou un rapprochement dudit terminal par rapport à l'unité locale de suivi de maintenance (1) en franchissant une distance-seuil.

7. Unité locale de suivi de maintenance (1) selon l'une quelconque des revendications précédentes, dans lequel le processeur (2) est adapté pour inclure en outre dans le contenu de données, à l'étape /v/ parmi les données supplémentaires, une adresse URL non-cryptée.

8. Unité locale de suivi de maintenance (1) selon l'une quelconque des revendications précédentes, dans laquelle les moyens (5) de transmission de données, qui sont adaptés pour transmettre la valeur de vérification au serveur externe (100) par l'intermédiaire du réseau de communication externe, sont conformes à l'un des protocoles suivants : LoRaWAN, Wi-Fi, Sigfox®, et des protocoles de téléphonie mobile.

9. Unité locale de suivi de maintenance (1) selon l'une quelconque des revendications précédentes, comprenant en outre au moins un capteur (8a-8c) sélectionné parmi un capteur de monoxyde de carbone, un capteur de composés organiques volatiles, un capteur de température, un capteur de pression, un capteur d'humidité, un capteur de débit d'air de ventilation, un capteur de vibrations, un microphone, un altimètre, un capteur de position d'un élément mécanique, un capteur de tension d'alimentation de l'équipement (10), et comprenant optionnellement en outre au moins une entrée (9) pour recevoir une donnée d'état de l'équipement,
et dans lequel le processeur (2) est agencé en outre pour inclure dans le contenu de données, à l'étape /v/ parmi les données supplémentaires, au moins un parmi un résultat de mesure produit par ledit au moins un capteur (8a-8c) et une donnée d'état reçue par ladite au moins une entrée (9).

10. Procédé de validation d'une mission d'intervention sur un équipement (10) effectuée par un technicien de maintenance (11), le procédé comprenant la séquence d'étapes suivante :
/1/ installer une unité locale de suivi de maintenance (1) conforme à l'une quelconque des revendications 1 à 9 à proximité de l'équipement (10) ;
/2/ par le terminal (12) de communication portable dont est muni le technicien de maintenance (11) : recevoir de la part du serveur externe (100) une clé de cryptage et la nouvelle valeur de vérification telle que transmise audit serveur externe à la dernière exécution de l'étape /iii/ ;
/3/ par le technicien de maintenance (11) lors de la mission d'intervention sur l'équipement (10), et en utilisant son terminal (12) : recueillir le contenu de données tel que mis à disposition par les moyens (4) de présentation de l'unité locale de suivi de maintenance (1) ; et
/4/ par le terminal (12) du technicien de maintenance (11) :
/4-1/ extraire la nouvelle valeur de vérification et l'horodatage crypté, à partir du contenu de données recueilli ;
/4-2/ décrypter l'horodatage crypté en utilisant la clé de cryptage ;
/4-3/ comparer la nouvelle valeur de vérification extraite à la sous-étape /4-1/ avec la nouvelle valeur de vérification telle que reçue à l'étape /2/, et comparer l'horodatage décrypté à la sous-étape /4-2/ avec une heure actuelle délivrée par le terminal (12), et si ladite nouvelle valeur de vérification extraite à la sous-étape /4-1/ et ladite nouvelle valeur de vérification telle que reçue à l'étape /2/ sont identiques, et qu'en plus l'horodatage décrypté est compatible avec l'heure actuelle délivrée par le terminal (12) selon une durée de validité de la valeur de vérification, compte tenu d'une marge d'erreur prédéterminée, alors la mission d'intervention du technicien de maintenance (11) est validée, et invalidée dans le cas contraire.

11. Procédé selon la revendication 10, suivant lequel la séquence des étapes /2/ à /4/ est répétée lorsque la mission d'intervention du technicien de maintenance (11) est invalidée à la sous-étape /4-3/.

12. Procédé selon la revendication 10 ou 11, suivant lequel l'étape /1/ comprend en outre :
- affectation et communication de l'identifiant à l'unité locale de suivi de maintenance (1), à partir du serveur externe (100) et par l'intermédiaire des moyens (5) de transmission de données de ladite unité locale de suivi de maintenance ; et
- communication de la clé de cryptage à l'unité locale de suivi de maintenance (1).

13. Procédé selon l'une quelconque des revendications 10 à 12, suivant lequel l'unité locale de suivi de maintenance (1) est conforme à la revendication 7, et suivant lequel le contenu de données est recueilli par un utilisateur de l'équipement (10) à partir des moyens (4) de présentation, puis l'adresse URL est mise en œuvre par ledit utilisateur pour communiquer à distance avec une société en charge de réaliser la maintenance de l'équipement ou avec un gestionnaire en charge d'organiser la maintenance, notamment pour solliciter une mission d'intervention sur l'équipement.

14. Procédé selon l'une quelconque des revendications 10 à 13, suivant lequel le contenu de données recueilli à l'étape /3/ contient en outre parmi les données supplémentaires, des informations utiles pour activer un dispositif d'alarme pour travailleur isolé, et lesdites informations utiles sont transmises par le terminal (12) à un centre d'assistance et de secours, par l'intermédiaire du réseau de communication externe.

15. Procédé selon l'une quelconque des revendications 10 à 14, suivant lequel l'équipement (10) est une chaudière de chauffage d'habitation, un équipement de production d'eau chaude sanitaire, ou un équipement de ventilation mécanique contrôlée.

## Patentansprüche

1. Lokale Wartungsüberwachungseinheit (1), welche dazu bestimmt ist, in der Nähe einer Anlage (10) installiert zu werden, um die Validierung eines Eingriffs an dieser Anlage zu ermöglichen, wobei die lokale Einheit dazu ausgebildet ist, das Erfassen, Speichern, Übertragen oder Liefern von Daten bezüglich eines von einem Wartungstechniker (11) im Einsatz an der Anlage durchgeführten Eingriffs zu ermöglichen, und die Folgendes umfasst:
- einen Prozessor (2),
- eine Uhr (3) innerhalb der lokalen Wartungsüberwachungseinheit (1),
- Darstellungsmittel (4), die von dem Prozessor (2) gesteuert werden und dazu ausgebildet sind, einen Dateninhalt einem tragbaren Kommunikationsendgerät (12) des Wartungstechnikers (11) zur Verfügung zu stellen, wobei sich das Endgerät außerhalb der lokalen Wartungsüberwachungseinheit (1) befindet, und
- Datenübertragungsmittel (5), die durch den Prozessor (2) gesteuert werden und dazu ausgebildet sind, einen Wert mittels eines Kommunikationsnetzes außerhalb der lokalen Wartungsüberwachungseinheit (1) an einen externen Server (100) zu übertragen,
**dadurch gekennzeichnet, dass** die lokale Wartungsüberwachungseinheit (1) ferner umfasst:
- einen Zufallsgenerator (6), der sich innerhalb der lokalen Wartungsüberwachungseinheit (1) befindet und der dazu ausgebildet ist, bei jeder Operation des Zufallsgenerators einen neuen Zufalls- oder Pseudozufallsprüfwert zu erzeugen, und
- einen Speicher (7), der dazu angeordnet ist, einen Wert in Verbindung mit einem von der Uhr (3) erhaltenen Zeitstempel zu speichern,
wobei der Prozessor (2) dazu ausgebildet ist, eine Ausführung der folgenden Schrittfolge zu steuern:
/i/ Steuern einer neuen Operation des Zufallsgenerators (6),
/ii/ Steuern einer Aktualisierung des Speichers (7) durch Ablegen des neuen Prüfwertes, der durch die neue Operation des Zufallsgenerators (6) erzeugt wurde, in Verbindung mit einem Zeitstempel der neuen Operation des Zufallsgenerators im Speicher,
/iii/ Steuern der Datenübertragungsmittel (5) zum Übertragen des neuen Prüfwertes an den externen Server (100) in Verbindung mit einer Kennung der lokalen Wartungsüberwachungseinheit (1),
/iv/ Verschlüsseln des Zeitstempels der neuen Operation des Zufallsgenerators (6),
/v/ Integrieren des neuen Prüfwertes, des verschlüsselten Zeitstempels, der Kennung der lokalen Wartungsüberwachungseinheit (1) und möglicherweise zusätzlicher Daten in den Dateninhalt, dann
/vi/ Steuern der Darstellungsmittel (4), um den Dateninhalt dem Endgerät (12) des Wartungstechnikers (11) als Ergebnis aus Schritt /v/ zur Verfügung zu stellen.

2. Lokale Wartungsüberwachungseinheit (1) nach Anspruch 1, wobei die Darstellungsmittel (4) eine Anzeigematrix umfassen, die von dem Prozessor (2) in Schritt /vi/ gesteuert wird, um einen zweidimensionalen Code anzuzeigen, der dem Dateninhalt als Ergebnis aus Schritt /v/ entspricht, derart dass ein Bild des angezeigten zweidimensionalen Codes, das von dem Wartungstechniker (11) mit seinem Endgerät (12) erfasst wird, eine Kopie des zweidimensionalen Codes darstellt, der dazu ausgebildet ist, den Dateninhalt wiederzugeben.

3. Lokale Wartungsüberwachungseinheit (1) nach Anspruch 2, wobei der zweidimensionale Code vom Typ QR-Code, Datamatrix oder Flash-Code ist.

4. Lokale Wartungsüberwachungseinheit (1) nach Anspruch 2 oder 3, wobei die Anzeigematrix vom Typ elektronische Tinte ist.

5. Lokale Wartungsüberwachungseinheit (1) nach Anspruch 1, welche ferner Nahbereichs-Kommunikationsmittel umfasst, die einer der folgenden Technologien entsprechen: Infrarotübertragung, drahtgebundene Übertragung, Bluetooth, NFC, LiFi und RFID.

6. Lokale Wartungsüberwachungseinheit (1) nach einem der vorhergehenden Ansprüche, welche dazu ausgebildet ist, eine Ausführung der Schritte /i/ bis /vi/ durch eines der folgenden Ereignisse auszulösen wird:
- Initialisierung oder Reinitialisierung der lokalen Wartungsüberwachungseinheit (1),
- Ablauf einer Gültigkeitsdauer des im Speicher (7) gespeicherten Prüfwertes, wobei die Gültigkeitsdauer vom Prozessor (2) aus dem Prüfwert bestimmt wird,
- Empfang eines Befehls von der lokalen Wartungsüberwachungseinheit (1) mittels Datenübertragungsmitteln (5), insbesondere von dem externen Server (100), oder mittels Nahbereichs-Kommunikationsmitteln (4) der lokalen Wartungsüberwachungseinheit, wobei der Befehl auf ein negatives Ergebnis eines Validierungstests des Eingriffs folgen kann, der auf dem Prüfwert und auf dem Zeitstempel basiert, wie im Dateninhalt enthalten, und dann von dem Endgerät (12) des Wartungstechnikers (11) von den Darstellungsmitteln (4) erfasst wird,
- abgeschlossene Ausführung eines Validierungstests des Eingriffs, die auf dem Prüfwert und dem Zeitstempel basiert, unabhängig vom positiven oder negativen Ergebnis des Tests, und
- Geolokalisierung des tragbaren Kommunikationsendgerätes (12) des Wartungstechnikers (11), die eine Entfernung der Annäherung zwischen dem besagten Endgerät und der lokalen Wartungsüberwachungseinheit (1) durch Überschreiten eines Schwellenabstands erkennen lässt.

7. Lokale Wartungsüberwachungsseinheit (1) nach einem der vorhergehenden Ansprüche, wobei der Prozessor (2) dazu ausgebildet ist, in dem Dateninhalt in Schritt /v/ unter den zusätzlichen Daten ferner eine unverschlüsselte URL-Adresse aufzunehmen.

8. Lokale Wartungsüberwachungseinheit (1) nach einem der vorhergehenden Ansprüche, wobei die Datenübertragungsmittel (5), welche dazu ausgebildet sind, den Prüfwert über das externe Kommunikationsnetz an den externen Server (100) zu übertragen, einem der folgenden Protokolle entsprechen: LoRaWAN, Wi-Fi, Sigfox® und Mobilfunkprotokolle.

9. Lokale Wartungsüberwachungseinheit (1) nach einem der vorhergehenden Ansprüche, welche ferner wenigstens einen Sensor (8a-8c) umfasst, der gewählt ist aus einem Kohlenmonoxidsensor, einem Sensor für flüchtige organische Verbindungen, einem Temperatursensor, einem Drucksensor und einem Feuchtigkeitssensor, einem Lüftungsluftstromsensor, einen Vibrationssensor, einem Mikrofon, einem Höhenmesser, einem Positionssensor für ein mechanisches Element, einem Sensor für die Versorgungsspannung der Anlage (10), und der optional ferner wenigstens einen Eingang (9) zum Empfangen von Gerätestatusdaten umfasst,
wobei der Prozessor (2) ferner dazu angeordnet ist, in dem Dateninhalt in Schritt /v/ unter den zusätzlichen Daten wenigstens eines aus einem Messergebnis durch den wenigstens einen Sensor (8a-8c) und einem von dem wenigstens einen Eingang (9) empfangenen Datenstand zu integrieren.

10. Verfahren zur Validierung eines von einem Wartungstechniker (11) durchgeführten Eingriffs an einer Anlage (10), wobei das Verfahren die folgende Schrittfolge umfasst:
/1/ Installieren einer lokalen Wartungsüberwachungseinheit (1) nach einem der Ansprüche 1 bis 9 in der Nähe der Anlage (10),
/2/ durch das tragbare Kommunikationsendgerät (12), mit dem der Wartungstechniker (11) ausgestattet ist: von dem externen Server (100) Empfangen eines Verschlüsselungsschlüssels und des neuen Prüfwerts, der bei der letzten Ausführung von Schritt /iii/ an den externen Server übertragen wurde,
/3/ durch den Wartungstechniker (11) während des Eingriffs an der Anlage (10) und unter Verwendung seines Endgeräts (12): Erfassen des Dateninhalts, wie er durch die Darstellungsmittel (4) der lokalen Wartungsüberwachungseinheit (1) zur Verfügung gestellt wird, und
/4/ durch das Endgerät (12) des Wartungstechnikers (11):
/4-1/ Extrahieren des neuen Prüfwertes und des verschlüsselten Zeitstempels aus dem erfassten Dateninhalt,
/4-2/ Entschlüsseln des verschlüsselten Zeitstempels unter Verwendung des Verschlüsselungsschlüssels,
/4-3/ Vergleichen des in dem Teilschritt /4-1/ extrahierten neuen Prüfwertes mit dem in Schritt /2/ eingestellten neuen Prüfwert und Vergleichen des in dem Teilschritt /4-2/ entschlüsselten Zeitstempels mit einer von dem Endgerät (12) ausgegebenen aktuellen Zeit, und wenn der in dem Teilschritt /4-1/ extrahierte neue Prüfwert und der in Schritt /2/ erhaltene neue Prüfwert identisch sind, und ferner der entschlüsselte Zeitstempel mit der vom Endgerät (12) ausgegebenen aktuellen Zeit gemäß einer Gültigkeitsdauer des Prüfwerts unter Berücksichtigung einer vorbestimmten Fehlerspanne kompatibel ist, Validierung des Eingriffsauftrags des Wartungstechnikers (11) und im umgekehrten Fall Annulierung.

11. Verfahren nach Anspruch 10, wobei die Schrittfolge /2/ bis /4/ wiederholt wird, wenn der Eingriff des Wartungstechnikers (11) in Teilschritt /4-3/ für ungültig erklärt wird.

12. Verfahren nach Anspruch 10 oder 11, wobei der Schritt /1/ ferner umfasst:
- Zuweisen und Kommunizieren der Kennung an die lokale Wartungsüberwachungseinheit (1), vom externen Server (100) und mittels der Datenübertragungseinrichtung (5) der lokalen Wartungsüberwachungseinheit, und
- Kommunizieren des Verschlüsselungsschlüssels an die lokale Wartungsüberwachungseinheit (1).

13. Verfahren nach einem der Ansprüche 10 bis 12, wobei die lokale Wartungsüberwachungseinheit (1) dem Anspruch 7 entspricht, und wobei der Dateninhalt von einem Benutzer der Anlage (10) mittels der Darstellungsmittel (4) erfasst wird, dann die URL-Adresse von diesem Benutzer verwendet wird, um aus der Ferne mit einem Unternehmen, das mit der Durchführung der Wartung der Anlage beauftragt ist, oder mit einem Verwalter, der mit der Organisation der Wartung beauftragt ist, zu kommunizieren, insbesondere um einen Eingriff an der Anlage anzufordern.

14. Verfahren nach einem der Ansprüche 10 bis 13, wobei der Inhalt der in Schritt /3/ erfassten Daten unter den zusätzlichen Daten auch nützliche Informationen für die Aktivierung einer Alarmvorrichtung für einen isolierten Arbeiter enthält, und diese nützlichen Informationen von dem Endgerät (12) über das externe Kommunikationsnetz an eine Hilfs- und Rettungszentrale übertragen werden.

15. Verfahren nach einem der Ansprüche 10 bis 14, wobei es sich bei der Anlage (10) um einen Heizkessel für einen Haushalt, eine Anlage zur Erzeugung von Warmwasser für einen Haushalt oder eine Anlage zur kontrollierten mechanischen Lüftung handelt.

## Claims

1. Local maintenance monitoring unit (1) intended to be installed near an item of equipment (10), in order to make it possible to validate a task onto said item of equipment, said local unit being adapted for allowing a capture, storage, transmission or supply of data relating to a task that is carried out by a maintenance technician (11) assigned to the equipment, and comprising:
- a processor (2);
- a clock (3) internal to said local maintenance monitoring unit (1);
- display means (4), controlled by the processor (2) and adapted for making data content available to a portable communication terminal (12) of the maintenance technician (11), said terminal being external to the local maintenance monitoring unit (1); and
- data transmission means (5), controlled by the processor (2) and adapted for transmitting a value to an external server (100) via a communication network external to the local maintenance monitoring unit (1);
**characterized in that** the local maintenance monitoring unit (1) also comprises:
- a random number generator (6), which is internal to said local maintenance monitoring unit (1), and adapted for producing a fresh check-value randomly or pseudo-randomly upon each operation of the random number generator; and
- a memory (7), arranged in order to store a value in combination with a timestamp obtained from the clock (3);
wherein the processor (2) is adapted for controlling execution of the following sequence of steps:
/i/ controlling a fresh operation of the random number generator (6);
/ii/ controlling an update of the memory (7) by writing to said memory the fresh check-value produced by the fresh operation of the random number generator (6), in combination with a timestamp of said fresh operation of the random number generator;
/iii/ controlling the data transmission means (5) to transmit the fresh check-value to the external server (100), together with an identifier of the local maintenance monitoring unit (1);
/iv/ encrypting the timestamp of the fresh operation of the random number generator (6);
/v/ including in the data content, the fresh check-value, the encrypted timestamp, the identifier of the local maintenance monitoring unit (1), and possibly additional data; then
/vi/ controlling the display means (4) to make the data content as resulting from step /v/ available to the terminal (12) of the maintenance technician (11).

2. Local maintenance monitoring unit (1) according to claim 1, wherein the display means (4) comprise a display array that is controlled by the processor (2) in step /iv/ in order to display a two-dimensional code according to the data content as resulting from step /v/, so that an image of the displayed two-dimensional code that is captured by the maintenance technician (11) with his terminal (12) constitutes a copy of the two-dimensional code capable of restoring the data content.

3. Local maintenance monitoring unit (1) according to claim 2, wherein the two-dimensional code is of QR-code, DataMatrix or Flashcode type.

4. Local maintenance monitoring unit (1) according to claim 2 or 3, wherein the display array is of E ink type.

5. Local maintenance monitoring unit (1) according to claim 1, further comprising short-range communication means that comply with one of the following technologies: infra-red transmission, wired transmission, Bluetooth, NFC, LiFi and RFID.

6. Local maintenance monitoring unit (1) according to any one of the preceding claims, adapted so that an execution of steps /i/ to /vi/ is triggered by one of the following events:
- initialization or reinitialization of the local maintenance monitoring unit (1);
- expiry of a validity period of the check-value stored in the memory (7), said validity period being determined by the processor (2) from said check-value;
- a command received by the local maintenance monitoring unit (1) via the data transmission means (5), in particular from the external server (100), or via the short-range communication means (4) of said local maintenance monitoring unit, said command being possibly subsequent to a negative result of a validation test of the task that is based on the check-value and on the timestamp as included in the data content, then retrieved by the terminal (12) of the maintenance technician (11) through the display means (4);
- completed execution of a validation test of the task, that is based on the check-value and on the timestamp, regardless of whether the result of said test is positive or negative; and
- geolocation of the portable communication terminal (12) of the maintenance technician (11) that reveals whether said terminal is moving away from or towards the local maintenance monitoring unit (1) by crossing a distance threshold.

7. Local maintenance monitoring unit (1) according to any one of the preceding claims, wherein the processor (2) is adapted for also including in the data content, in step /v/ among the additional data, an unencrypted uniform resource locator (url).

8. Local maintenance monitoring unit (1) according to any one of the preceding claims, wherein the data transmission means (5), which are adapted for transmitting the check-value to the external server (100) via the external communication network, comply with one of the following protocols: LoRaWAN, WiFi, Sigfox®, and mobile telephony protocols.

9. Local maintenance monitoring unit (1) according to any one of the preceding claims, further comprising at least one sensor (8a-8c) selected from a carbon monoxide sensor, a volatile organic compound sensor, a temperature sensor, a pressure sensor, a humidity sensor, a ventilation airflow sensor, a vibration sensor, a microphone, an altimeter, a position sensor of a mechanical element, a supply voltage sensor of the equipment (10), and optionally further comprising at least one input (9) for receiving an item of equipment status data,
and wherein the processor (2) is further arranged to include in the data content, in step /v/ among the additional data, at least one among a measurement result produced by said at least one sensor (8a-8c) and an item of status data received by said at least one input (9).

10. Method for validation of a task onto an item of equipment (10), carried out by a maintenance technician (11), the method comprising the following sequence of steps:
/1/ installing a local maintenance monitoring unit (1) according to any one of claims 1 to 9, near the equipment (10);
/2/ by the portable communication terminal (12) with which the maintenance technician (11) is equipped: receiving from the external server (100) an encryption key and the fresh check-value as transmitted to said external server upon the latest execution of step /iii/;
/3/ by the maintenance technician (11) during the task onto the equipment (10), and using his terminal (12): retrieving the data content as made available by the display means (4) of the local maintenance monitoring unit (1); and
/4/ by the terminal (12) of the maintenance technician (11):
/4-1/ extracting the fresh check-value and encrypted timestamp, from the data content retrieved;
/4-2/ decrypting the encrypted timestamp by using the encryption key;
/4-3/ comparing the fresh check-value extracted in sub-step /4-1/ with the fresh check-value as received in step /2/, and comparing the timestamp decrypted in sub-step /4-2/ with a current time delivered by the terminal (12), and if said fresh check-value extracted in sub-step /4-1/ and said fresh check-value as received in step /2/ are identical, and in addition the decrypted timestamp is compatible with the current time delivered by the terminal (12) according to a validity period of the check-value, taking into account a predetermined error margin, then the task of the maintenance technician (11) is validated, and if this is not the case, invalidated.

11. Method according to claim 10, wherein the sequence of steps /2/ to /4/ is repeated when the task of the maintenance technician (11) is invalidated in sub-step /4-3/.

12. Method according to claim 10 or 11, wherein step /1/ further comprises:
- allocation and communication of the identifier to the local maintenance monitoring unit (1), from the external server (100) and via the data transmission means (5) of said local maintenance monitoring unit; and
- communication of the encryption key to the local maintenance monitoring unit (1)

13. Method according to any one of claims 10 to 12, wherein the local maintenance monitoring unit (1) meets claim 7, and wherein which the data content is retrieved by a user of the equipment (10) using the display means (4), then the url is used by said user in order to communicate remotely with a company responsible for carrying out maintenance of the equipment, or with a manager responsible for organizing the maintenance, in particular in order to request a task onto the equipment.

14. Method according to any one of claims 10 to 13, wherein the data content retrieved in step /3/ further contains, among the additional data, useful information for activating an alarm device for a lone worker, and said useful information is transmitted by the terminal (12) to an assistance and emergency response centre, via the external communication network.

15. Method according to any one of claims 10 to 14, wherein the equipment (10) is an individual home heating boiler, an item of equipment for production of domestic hot water, or an item of equipment for controlled mechanical ventilation.
